# EUROPÄISCHE PATENTANMELDUNG

(11) **EP 1 048 532 A2**
(43) Veröffentlichungstag der Anmeldung: **02.11.2000**
(21) Anmeldenummer: 00108100.9
(22) Anmeldetag: 26.04.2000
(51) Int. Cl.: B60R 21/22

(54) **Seitengassack-Rückhaltesystem**

(30) Priorität: 29.04.1999 DE 29907622 U
(71) Anmelder: TRW Occupant Restraint Systems GmbH & Co. KG, 73553 Alfdorf (DE)
(72) Erfinder: Fischer, Anton, 73579 Leinweiler (DE)
(74) Vertreter: Kitzhofer, Thomas, Dipl.-Ing.

(57) **Zusammenfassung**

Die Erfindung betrifft ein Seitengassack-Rückhaltesystem, mit einem wenigstens eine Seitenscheibe des Fahrzeugs wenigstens teilweise abdeckenden, großflächigen Gassack (1), der einen nicht aufblasbaren Abschnitt (37, 67) aufweist.
Eine aufblasbare Rückhaltekammer (23, 41) ist, bezogen auf den aufgeblasenen Zustand des Gassacks (1), vorderhalb und oberhalb einer zugeordneten Rückenlehne (21) des Fahrzeugs zur Rückhaltung des Kopfes des Insassen vorgesehen. Das Rückhaltesystem ist dadurch gekennzeichnet, daß die aufblasbare Rückhaltekammer (23, 41) mit mehreren strömungsmäßig in Reihe geschalteten, nacheinander längs des unteren Randes (25) des Gassacks (1) angeordneten aufblasbaren Abspannkammern (27, 29, 31, 43, 45, 47) verbunden ist. Die Abspannkammern weisen Verengungen zwischen sich auf und der nicht aufblasbare, großflächig ausgebildete Abschnitt (37, 67) ist bei aufgeblasenem Gassack (1) zwischen den Kammern (23, 27, 29, 31, 41, 43, 45, 47) und dem Fahrzeug gespannt.

## Beschreibung

Die Erfindung betrifft ein Seitengassack-Rückhaltesystem, mit einem wenigstens eine Seitenscheibe des Fahrzeugs wenigstens teilweise abdeckenden, großflächigen Gassack, der einen nicht aufblasbaren Abschnitt und wenigstens eine aufblasbare Rückhaltekammer aufweist, die, bezogen auf den aufgeblasenen Zustand des Gassacks, vorderhalb und oberhalb einer zugeordneten Rückenlehne des Fahrzeugs zur Rückhaltung des Kopfes des Insassen vorgesehen ist.

Ein derartiges Seitengassack-Rückhaltesystem ist aus der DE 298 02 507 bekannt. Der darin gezeigte Gassack hat einen aufgespannten, schlauchförmigen Gassackabschnitt, der im aufgeblasenen Zustand kugelförmig ist. Dieser Abschnitt bildet ein aufblasbares Abspannband, durch das noch eine zusätzliche Kammer für das einströmende Gas zur Verfügung steht.

Es wird angestrebt, die Fläche des Gassacks zum Zurückhalten des Kopfes als auch der Hände möglichst groß auszubilden und den Gassack im aufgeblasenen Zustand möglichst stabil im Fahrzeug zu positionieren.

Diesen Zielen kommt die Erfindung noch näher als der bereits bekannte Stand der Technik, indem die aufblasbare Rückhaltekammer, auf der Kopf des Insassen bei einem Seitenaufprall trifft, mit mehreren strömungsmäßig in Reihe geschalteten, nacheinander längs des unteren Randes des Gassacks angeordneten aufblasbaren Abspannkammern verbunden ist, die zwischen sich Verengungen aufweisen. Zudem ist der nicht aufblasbare, großflächig ausgebildete Abschnitt bei aufgeblasenem Gassack zwischen den Kammern und dem Fahrzeug gespannt. Der nicht aufblasbare Abschnitt verbindet alle Kammern miteinander und ist am Fahrzeug, vorzugsweise an dem Dachrahmen oder einer Fahrzeugsäule (A-, B- oder C-Säule) befestigt. Damit verbindet er auch sämtliche Kammern kräftemäßig. Die Abspannkammern, die im Verhältnis zur Rückhaltekammer kein großes Volumen aufweisen müssen, dienen zur Längenkontraktion des Gassacks hauptsächlich in horizontaler Richtung. Darüber hinaus führen sie zwangsläufig auch zu einer gewissen Längenkontraktion in vertikaler Richtung. Sämtliche hierbei auftretenden Kontraktionskräfte werden über den großflächigen, nicht aufblasbaren Abschnitt in das Fahrzeug eingeleitet. Der nicht aufblasbare Abschnitt verbessert somit die Positionierung des Gassacks wesentlich und steht als zusätzliche Rückhaltefläche zur Verfügung. Die zahlreichen, hintereinander angeordneten und strömungsmäßig in Reihe geschalteten Abspannkammern werden über die Rückhaltekammer wenigstens teilweise aufgeblasen. Beim Auftreffen des Kopfes auf die Rückhaltekammer entstehen in dieser hohe Drücke. Diese werden abgebaut, indem das Gas durch die Intrusion des Kopfes in die Abspannkammern entweichen kann. Da die Abspannkammern zwischen sich Verengungen aufweisen, die als Drosselventile wirken, ergibt sich eine gute Dämpfungswirkung. Die Spitzendrücke werden somit durch stufenweises Überströmen von Abspannkammer zu Abspannkammer wie bei einem Stoßdämpfer abgebaut.

Das erfindungsgemäße Seitengassack-Rückhaltesystem zeichnet sich trotz seiner stabilen Positionierung im Fahrzeug auch durch eine "weiche" Rückhaltung des Kopfes des Insassen aus. Dies wird durch die Kombination von Rückhaltekammer, strömungsmäßig miteinander verbundenen, aber Verengungen zwischen sich aufweisenden Abspannkammern und dem nicht aufblasbaren, großflächigen Abschnitt erreicht.

Die Rückhaltekammer erstreckt sich gemäß der bevorzugten Ausführungsform im wesentlichen vom Dachrahmen aus vertikal nach unten bis zum unteren Rand des Gassacks. Die Einblasöffnung des Gassacks ist direkt mit der Rückhaltekammer verbunden, so daß sie vor den Abspannkammern aufgeblasen wird. Durch diese Ausgestaltung soll sichergestellt werden, daß zuerst die Rückhaltekammer zur Rückhaltung zur Verfügung steht und sich keine unnötigen Verzögerungen beim Aufblasen ergeben können. Da die Rückhaltekammer im wesentlichen vertikal vom Dachrahmen aus nach unten verläuft und sich daran die längs des unteren Randes verlaufenden Abspannkammern anschließen, bilden sämtliche Kammern zusammen insgesamt ein "L". Der übrige Bereich des zugeordneten Seitenfensters, der vom Kopf des Insassen normalerweise nicht kontaktiert wird, wird durch den nicht aufblasbaren Abschnitt abgedeckt.

Die aufblasbaren Abspannkammern haben im aufgeblasenen Zustand des Gassacks im wesentlichen eine kugel- oder zylinderförmige Gestalt. Dies führt zu einer möglichst großen Oberfläche und damit einer großen Längenkontraktion.

Der Gassack soll vorzugsweise so gefaltet und die Strömungsverbindung der Kammern untereinander soll so ausgebildet sein, daß ein Überströmen von Gas von der Rückhaltekammer in die Abspannkammern erst bei annähend vollständig nach unten entfaltetem Gassack möglich ist. Der Gassack soll damit, selbst wenn die Rückhaltekammer noch nicht vollständig aufgeblasen ist, vollständig nach unten entfaltet sein und die Seitenscheibe abdecken, bevor er sich zwischen seinen Befestigungspunkten verspannt.

Die zuvor bereits erläuterte Dämpfungswirkung mittels der Abspannkammern wird beispielsweise dadurch erreicht, daß das Gassack-Rückhaltesystem den Gasgenerator selbst umfaßt und die eingeblasene Gasmenge und die Volumina der Kammern sowie deren Strömungsverbindung so aufeinander abgestimmt sind, daß wenigstens eine Abspannkammer durch den Gasgenerator nicht vollständig aufgeblasen wird. Das dann noch in der oder den Abspannkammern zur Verfügung stehende Volumen läßt ein Überströmen von Gas beim Auftreffen des Kopfes auf die Rückhaltekammer zu.

Weitere Merkmale und Vorteile der Erfindung ergeben sich aus der nachfolgenden Beschreibung und aus der nachfolgenden Zeichnung, auf die Bezug genommen wird.

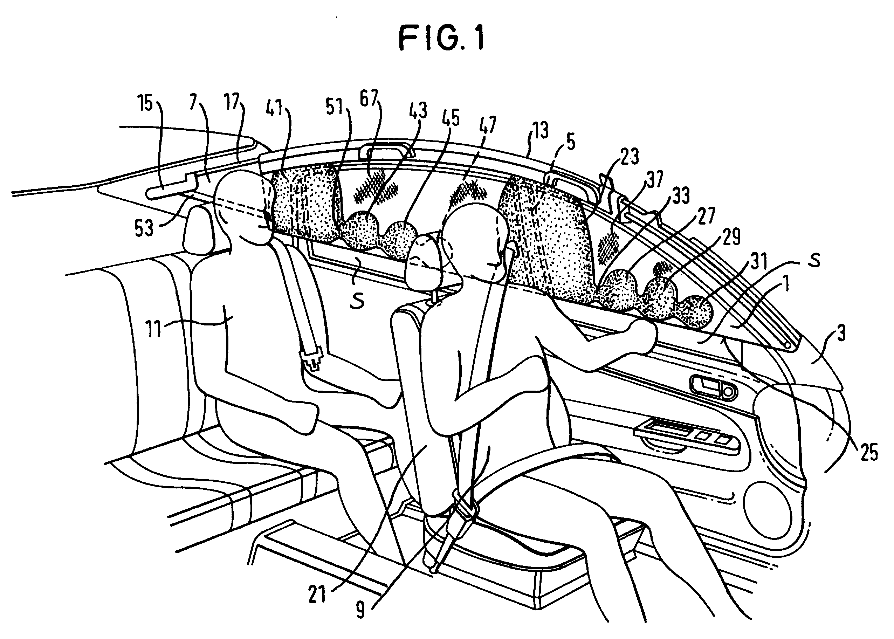

Figur 1 zeigt teilweise eine Innenansicht eines Fahrzeugs mit eingebautem, erfindungsgemäßem Seitengassack-Rückhaltesystem, wobei der Gassack in aufgeblasenem Zustand dargestellt ist.

Das in Figur 1 gezeigte Seitengassack-Rückhaltesystem weist einen sogenannten ABC-Gassack 1 auf, der sich von der A-Säule 3 des Fahrzeugs über die B-Säule 5 bis zur C-Säule 7 erstreckt und sowohl die Seitenscheibe seitlich des Fahrzeugfrontinsassen 9 als auch die seitlich des Heckinsassen 11 auf einer Fahrzeugseite abdecken soll. Der somit sehr großflächig ausgebildete Gassack 1 ist im gefaltetem Zustand hinter der Verkleidung der A-Säule 3 und des Dachrahmens 13 untergebracht. Die jeweiligen Seitenscheiben S sind vom entfalteten Gassack 1 fast vollständig verdeckt. Im Bereich der C-Säule 7 noch hinter dem Kopf des Heckinsassen ist ein Gasgenerator 15 als Teil des Rückhaltesystems angeordnet. Eine Gaslanze 17 verbindet den Gasgenerator 15 mit dem Inneren des Gassacks 1. Die Gaslanze 17 kann dabei am hinteren Ende des Gassacks 1 enden oder sich weit in das Innere des Gassacks 1 bis beispielsweise seitlich des Kopfes des Heckinsassen längs des Dachrahmens 13 erstrecken und dabei auf ihrer Länge Austrittsöffnungen haben.

Der Gassack 1 ist einstückig ausgebildet, indem zwei gegenüberliegende Gewebelagen miteinander vernäht oder verwoben sind. Der Gassack sollte möglichst gasdicht ausgebildet sein, indem er z.B. eine Beschichtung hat oder aus einem entsprechend gasdichten Textilgewebe ist, damit seine sogenannte Standzeit im aufgeblasenen Zustand möglichst lang ist.

Der Gassack 1 hat mehrere nicht aufblasbare Abschnitte und aufblasbare Kammern, die im folgenden erst für den Bereich seitlich des Frontinsassen 9 und dann für den Bereich seitlich des Heckinsassen 11 erläutert werden. Geringfügig vorderhalb und oberhalb der Rückenlehne 21 des Frontinsassen 9, also seitlich des Kopfes des Frontinsassen 9, weist der Gassack 1 eine erste aufblasbare Rückhaltekammer 23 auf, die sich vom Dachrahmen 13 aus als breites Band nach unten bis zum unteren Rand 25 des Gassacks 1 erstreckt und eine kissenförmige Gestalt aufweist. Die erste aufblasbare Rückhaltekammer 23 mündet unmittelbar in eine Einblasöffnung. Diese Einblasöffnung kann beispielsweise durch zahlreiche kleine Öffnungen der Gaslanze 17 gebildet sein, wenn sie sich bis zur ersten Rückhaltekammer 23 längs des Dachrahmens 13 nach vorne erstreckt. Am unteren Ende der ersten Rückhaltekammer 23 ist diese strömungsmäßig mit mehreren, längs des unteren Randes 25 verlaufenden und strömungsmäßig in Reihe geschalteten sogenannten Abspannkammern 27, 29, 31 verbunden. Zwischen der ersten Rückhaltekammer 23 und der in Strömungsrichtung ersten Abspannkammer 27 ist eine deutliche Verengung 33 vorgesehen. Weitere, nicht explizit bezeichnete, aber dargestellte Verengungen sind dann zwischen den einzelnen Abspannkammern 27, 29 und 31 vorhanden. Die Abspannkammern 27, 29, 31 haben in vollständig aufgeblasenem Zustand eine kugelförmige Gestalt. Sämtliche aufblasbaren Kammern 23, 27, 29, 31 werden durch einen nicht aufblasbaren Abschnitt 37 miteinander verbunden. Der nicht aufblasbare Abschnitt 37 deckt im aufgeblasenen Zustand des Gassacks diejenigen Bereiche der Seitenscheibe ab, die nicht bereits durch die aufblasbaren Kammern abgedeckt sind. Befestigt ist der nicht aufblasbare Abschnitt 37 längs des Dachrahmens 13 und der A-Säule 3.

Zu erkennen ist in Figur 1 auch, daß die erste Rückhaltekammer 23 auch die B-Säule 5 abdeckt, die bei einem Seitenaufprall ein hohes Verletzungsrisiko darstellt.

Die Gestalt des Bereichs des Gassacks 1, der zum Schutze des Heckinsassen 11 dient, ist ähnlich dem Abschnitt für den Frontinsassen 9 ausgebildet. Etwas vorderhalb und oberhalb der Rückenlehnen des Heckinsassen 11, d.h. seitlich des Kopfes des Insassen 11, hat der Gassack 1 eine zweite aufblasbare, kissenförmige Rückhaltekammer 41, die auch vom Dachrahmen 13 nach unten bis zum unteren Rand 25 verläuft. Die zweite Rückhaltekammer 41 deckt einen Teil der Seitenscheibe und einen Teil der C-Säule 7 ab. Strömungsmäßig schließen sich an die zweite Rückhaltekammer auch mehrere kugelförmige Abspannkammern 43, 45, 47 an, die auch längs des unteren Randes 25 nach vorne verlaufen und strömungsmäßig in Reihe geschaltet sind. Mit 51 ist eine Verengung zwischen der zweiten Rückhaltekammer 41 und der ersten Abspannkammer 43 bezeichnet. Am fahrzeugheckseitigen, unteren Ende des Gassacks 1 greift ein Abspannband 53 an, das parallel zum unteren Rand 25 verläuft und den Gassack mit der C-Säule 7 verbindet.

Im folgenden wird die Funktionsweise des erfindungsgemäßen Seitengassack-Rückhaltesystems erläutert.

Bei einem Seitenaufprall oder einem Überschlag wird der Gasgenerator 15 aktiviert. Das erzeugte Gas strömt über die Gaslanze 17 in den Gassack 1 ein, wobei über die Einblasöffnung für die erste Rückhaltekammer 23 und eine entsprechende Einblasöffnung für die zweite Rückhaltekammer 41 das Gas zuerst in diese Kammern gelangt. Der Gassack entfaltet sieh durch das Aufblasen der Rückhaltekammern 23, 41 zuerst nach unten. Durch die Verengungen 33, 51 und deren Lage ganz nahe des unteren Randes 25 des Gassacks 1 werden die Rückhaltekammern 23, 41 zuerst fast vollständig aufgeblasen, bis Gas schließlich über die Verengungen 33, 51 nacheinander in die Abspannkammern 27, 29, 31, 43, 45, 47 gelangen kann. Das Aufblasen dieser Abspannkammern verzögert das Entfalten des Gassacks nicht. Die Menge des durch den Gasgenerator 15 eingebrachten Gases ist so auf die Volumina der Kammern sowie deren Strömungsverbindungen (Verengungen) abgestimmt, daß wenigstens eine Abspannkammer durch den Gasgenerator nicht vollständig aufgeblasen wird. Das Aufblasen aller übrigen Abspannkammern reicht jedoch dafür aus, daß es zu einer deutlichen Längenkontraktion des Gassacks im Bereich des unteren Randes 25 kommt. Auch in vertikaler Richtung kommt es zu einer Längenkontraktion. Der Gassack 1 verspannt sich dadurch längs seines unteren Randes 25 zwischen seinen Befestigungsstellen an der A-Säule 3 und der C-Säule 7. Darüber hinaus verspannt er sich, wie gesagt, auch in vertikaler Richtung, so daß die nicht aufblasbaren Abschnitte 37 und 67 ebenfalls gespannt sind und als zusätzliche Rückhaltefläche dienen.

Die Verengungen zwischen den einzelnen Kammern haben eine Doppelfunktion, indem sie einerseits für die Kugelform der Abspannkammern und andererseits als Drossel für das in sie einströmende Gas dienen.

Beim Auftreffen des Kopfes des jeweiligen Insassen auf seine zugeordnete Rückhaltekammer 23 oder 41 kommt es zu einem hohen Gasdruck im Inneren der Rückhaltekammer. Um diese Spitzendrücke abzubauen, kann Gas über die Verengungen 33, 51 und die nachfolgenden Verengungen stufenweise in die Abspannkammern gelangen, wobei die in die Abspannkammern entweichende Gasmenge natürlich nicht so groß sein darf, daß ein Durchschlagen des Gassacks und ein Kontaktieren der Seitenscheibe, der B- oder der C-Säule möglich ist. Ein Überströmen von Gas wird durch die nicht vollständig aufgeblasene Abspannkammer oder mehrere nicht vollständig aufgeblasenen Abspannkammern erleichtert. Die Reihenschaltung der Abspannkammern mit ihren als Drossel wirkenden Verengungen zwischen sich bewirkt eine stufenweise Dämpfung und einen gezielten Abbau der Spitzendrücke, wenn es zum Aufprall des Insassen auf den Gassack kommt. Die Verengungen können auch einen immer geringer werdenden Strömungsquerschnitt aufweisen, so daß z.B. die in Strömungsrichtung letzten Abspannkammern 31, 47 durch den Gasgenerator 15 am wenigsten gefüllt werden. Somit kann sich der Spitzendruck im Gassack beim Auftreffen des Kopfes langsam von Abspannkammer zu Abspannkammer reduzieren.

## Patentansprüche

1. Seitengassack-Rückhaltesystem, mit
einem wenigstens eine Seitenscheibe des Fahrzeugs wenigstens teilweise abdeckenden, großflächigen Gassack (1),
der einen nicht aufblasbaren Abschnitt (37, 67) und wenigstens eine aufblasbare Rückhaltekammer (23, 41) aufweist, die, bezogen auf den aufgeblasenen Zustand des Gassacks (1), vorderhalb und oberhalb einer zugeordneten Rückenlehne (21) des Fahrzeugs zur Rückhaltung des Kopfes des Insassen vorgesehen ist,
dadurch gekennzeichnet,
daß die aufblasbare Rückhaltekammer (23, 41) mit mehreren strömungsmäßig in Reihe geschalteten, nacheinander längs des unteren Randes (25) des Gassacks (1) angeordneten aufblasbaren Abspannkammern (27, 29, 31, 43, 45, 47) verbunden ist, die zwischen sich Verengungen aufweisen, und
daß der nicht aufblasbare, großflächig ausgebildete Abschnitt (37, 67) bei aufgeblasenem Gassack (1) zwischen den Kammern (23, 27, 29, 31, 41, 43, 45, 47) und dem Fahrzeug gespannt ist.

2. Seitengassack-Rückhaltesystem nach Anspruch 1, dadurch gekennzeichnet, daß die Rückhaltekammer (23, 41) im aufgeblasenen Zustand des Gassacks (1) im wesentlichen vom Dachrahmen (13) aus vertikal nach unten bis zum unteren Rand (25) des Gassacks (1) verläuft und mit einer Einblasöffnung direkt verbunden ist, so daß sie vor den Abspannkammern (27, 29, 31, 43, 45, 47) aufgeblasen wird.

3. Seitengassack-Rückhaltesystem nach Anspruch 1 oder 2, dadurch gekennzeichnet, daß die Abspannkammern (27, 29, 31, 43, 45, 47) im aufgeblasenen Zustand im wesentlichen eine kugel- oder zylinderförmige Gestalt haben.

4. Seitengassack-Rückhaltesystem nach einem der vorhergehenden Ansprüche, dadurch gekennzeichnet, daß der nicht aufblasbare Abschnitt (37, 67) im aufgeblasenen Zustand des Gassacks (1) im wesentlichen den gesamten, nicht bereits durch die aufgeblasenen Kammern (23, 27, 29, 31, 41, 43, 45, 47) abgedeckten Bereich der zugeordneten Seitenscheibe abdeckt.

5. Seitengassack-Rückhaltesystem nach einem der vorhergehenden Ansprüche, dadurch gekennzeichnet, daß der nicht aufblasbare Abschnitt (37, 67) längs des Dachrahmens (13) und/oder einer Fahrzeugsäule (3, 5, 7) befestigt ist.

6. Seitengassack-Rückhaltesystem nach einem der vorhergehenden Ansprüche, dadurch gekennzeichnet, daß der Gassack (1) so gefaltet und die Strömungsverbindung der Kammern (23, 27, 29, 31, 41, 43, 45, 47) so ausgebildet ist, daß ein Überströmen von Gas von der Rückhaltekammer (23, 41) in die Abspannkammern (27, 29, 31, 43, 45, 47) erst bei sich annähernd vollständig nach unten entfaltetem Gassack (1) möglich ist.

7. Seitengassack-Rückhaltesystem nach einem der vorhergehenden Ansprüche, dadurch gekennzeichnet, daß das Seitengassack-Rückhaltesystem einen Gasgenerator (15) umfaßt und daß die eingeblasene Gasmenge und die Volumina der Kammern (23, 27, 29, 31, 41, 43, 45, 47) sowie deren Strömungsverbindung so aufeinander abgestimmt sind, daß wenigstens eine Abspannkammer (27, 29, 31, 43, 45, 47) durch den Gasgenerator (15) nicht vollständig aufgeblasen wird.

8. Seitengassack-Rückhaltesystem nach einem der vorhergehenden Ansprüche, dadurch gekennzeichnet, daß sich der Gassack (1) von der A-Säule (3) bis zur C-Säule (7) des Fahrzeugs erstreckt und seitlich des Front- und seitlich des Heckinsassen (9, 11) jeweils eine Rückhaltekammer (23, 41) vorgesehen ist, von der aus sich die Abspannkammern (27, 29, 31, 43, 45, 47) nach vorne erstrecken.
